# EUROPEAN PATENT SPECIFICATION

(11) **EP 1 876 408 B1**
(45) Date of publication and mention of the grant of the patent: **31.08.2011**
(21) Application number: 07111468.0
(22) Date of filing: 29.06.2007
(51) Int. Cl.: F41B 7/04

(54) **Device for releasing the spear shaft of a fishing gun for scuba divers**
Vorrichtung zur Freigabe des Speerschaftes eines Harpunengeschützes für Gerätetaucher
Dispositif destiné à libérer la tige de harpon dans un fusil lance-harpon pour plongeurs sous-marins

(30) Priority: 05.07.2006 IT FI20060172
(43) Date of publication of application: 09.01.2008
(73) Proprietor: Cressi-Sub S.p.A., 16165 Genova (IT)
(72) Inventor: Pedemonte, Stefano, 16164 Genova (IT)
(74) Representative: Bardini, Marco Luigi

(56) References cited:
- FR-A1- 2 237 167
- FR-A1- 2 272 365
- FR-A5- 2 129 212
- US-A- 5 904 132

## Description

The present invention relates generally to the field of equipment for underwater activities and more specifically to the field of spear guns for fishing and underwater hunting. In particular, the invention relates to a device for releasing the spear shaft of a fishing gun for scuba divers.

The general features of a spear gun for scuba divers are well known. Basically, a gun of this type comprises a frame comprising a longitudinally elongated body fitted at the rear end with a grip and a trigger that is pulled to eject a spear attached to the front end of a shaft mounted slidingly on the elongated body of said frame. The rear end of the shaft is connected to a string line for the retrieval of the spear and any prey caught by the diver.

The propulsive force of the spear is provided by a pair of cables made of an elastic material that are stretched and hooked onto the shaft of the spear when the diver loads the gun, then the spear is released when the trigger is pulled, converting the elastic energy accumulated by the elastic cables into kinetic energy in the spear shaft.

The kinematic mechanism that enables the diver to shoot the spear by means of the trigger generally comprises a lever hinged onto the frame and presenting a latch element at one end that engages in a notch at the proximal end of the spear shaft when the spear on the gun is loaded so as to withstand the pulling force exerted on the shaft by the elastic cables. During the movement used to load the spear gun, the proximal end of its shaft abuts against a radial appendage on the lever, thereby inducing its rotation, as a result of which, in addition to the latch element engaging in the notch on the shaft, the opposite end of the lever elastically engages within a seat in the trigger formed on the side opposite its operating arm. The disengagement of the lever from the trigger, which is induced by a finger pulling on its operating arm, causes the shaft to be released from the latch element on the lever and the propulsive force of the elastic cables prevails. A kinematic chain of this type is shown, for instance, in US 5904132 and FR 2129212 A5 (starting point for independent claim 1).

In the spear fishing guns of the known type, the kinematic chains used to operate them, such as the one described above, do not allow for any adjustment of the stroke of the trigger and of the effort needed to pull it. In the event of the scuba diver's finger being scarcely sensitive due to limited experience, or for contingent reasons such as the use of very thick gloves, the spear may be released by accident if the stroke of the trigger is short. In other words, the problem of graduating the effort required to pull the trigger and/or adjusting the trigger's stroke is strongly felt and has yet to find a simple and safe solution.

The object of the present invention is to provide a fishing gun for scuba divers with a device for releasing a spear shaft wherein the effort required to pull the trigger and/or the operating stroke of the trigger can be graduated according to a given diver's needs and features.

A particular object of the invention is to provide a device of the aforementioned type wherein the force required to pull the trigger and/or the trigger's stroke can be adjusted quickly and easily by means of a kinematic chain that is not particularly complex from the point of view of its manufacture and assembly.

These objects are achieved with a fishing gun for scuba divers with a device for releasing a spear shaft according to the present invention, wherein the latch element is formed on a first lever, the front end of which is pivotally connected to a threaded stem fixedly attached to the frame of the gun and lying parallel to its longitudinal axis and elastic means are provided for keeping the first lever in a resting position, corresponding to the situation when the gun is not loaded, wherein the latch element abuts against a first shoulder integrally attached to the frame and is axially aligned with the spear shaft when it is prepared for loading on the elongated body of the frame. The trigger comprises an elastically-tensioned abutment portion for the front end of the first lever and extending forward from a convex upper surface intersecting a concave surface at an edge that traces a first circular trajectory as the trigger is rotated. A second lever pivotally connected to the frame at a point situated behind the latch element and below the front end of the first lever is also provided, the front end of the second lever being movable along a second circular trajectory intersecting the first circular trajectory. An arm of the second lever extends to intersect the trajectory of the spear shaft when the gun is loaded, whereby during the axial movement to load the spear, the spear shaft abuts against the latch element first, displacing the first lever from its resting position and occupying a loaded position wherein the latch element engages in the shaped recess in the shaft, and then it abuts against the arm of the second lever, making the latter rotate until it abuts against the first lever on at the latch element, simultaneously bringing its front end up against the convex surface of the trigger. The front end of the first lever is slidingly connected to the threaded stem, whereby the first lever is adjustably displaceable in the longitudinal axis direction to enable a variation in the point where the first lever rests on the second lever and the consequent force with which the front end of the second lever rests against the convex surface of the trigger.

Additional characteristics and advantages of the fishing gun for scuba divers with a device for releasing the spear shaft according to the present invention will become apparent from the following description of an embodiment, provided herein as a non-limiting example with reference to the attached drawings, wherein:
- figure 1 shows a schematic longitudinal section of the device according to the invention in the resting position, ready for loading with the spear shaft;
- figure 2 shows the device according to the invention in an intermediate position with the spear shaft being loaded;
- figure 3 shows the device according to the invention in a further intermediate position with the spear shaft in a more advanced phase of loading;
- figure 4 shows the device according to the invention completely loaded;
- figure 5 shows the device according to the invention immediately after pulling the trigger;
- figure 6 shows the device according to the invention in a similar condition to the one in figure 4, but with a different adjustment of the effort required to pull the trigger.

Hereinafter, the adjectives "front" and "rear" refer to the orientation of the gun and refer to the left and right ends, respectively, as the spear gun appears in the figures. The adjectives "upper" and "lower" are used in an absolute sense and refer to the axis of longitudinal symmetry of the gun: the shaft and spear point are placed in the upper part of the gun, i.e. above its axis of symmetry, while the trigger is conventionally positioned in the lower part of the gun.

The illustration of the fishing gun for scuba divers is restricted to the elements comprising the release device according to the invention. The swivel pins for the articulation of the various component parts and the abutment elements for the moving parts are consequently only shown schematically, said pins and abutment elements being integrally attached to the gun frame, which is not shown in its entirety because it is structurally well-known to a person skilled in the art.

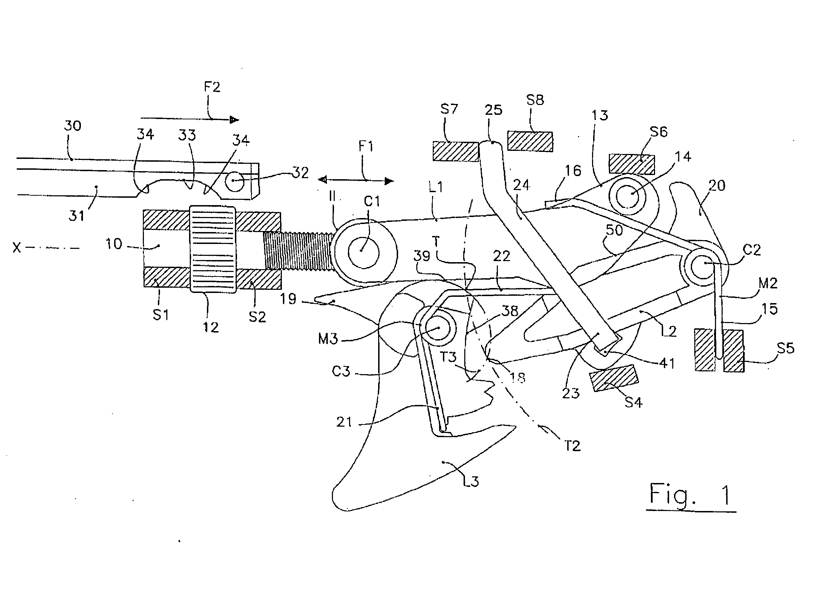

With particular reference to figure 1, S1 and S2 are used to indicate a cross-sectional view of two bushes integrally attached to the gun frame; S4, S5, S6, S7 and S8 are abutment elements integrally attached to the gun frame, and are consequently fixed in position, their purpose being to contain the movements of the moving parts of the device, as explained later on. The movable elements of the device comprise a first lever L1, a second lever L2 and a trigger L3 articulated respectively around pins C1, C2 and C3, which are integrally attached to the frame.

In particular, the lever L2 and the trigger L3 have a flattened shape and lie substantially in the vertical plane of symmetry of the gun, passing through its longitudinal axis X, while the lever L1 comprises two symmetrical elements (only one of them shown in the figures), lying parallel to the plane of symmetry of the gun, the distance between them corresponding to at least the thicknesses of the lever L2 and of the trigger L3 so that the latter two elements can move without interfering with the movement of the lever L1.

The bushes S1 and S2 support a freely-revolving longitudinal threaded stem 10, the rear end of which (facing towards the right in the figure) is threaded inside and screws into a corresponding threaded hole in a transverse hub 11 from either side of which there project two transverse, symmetrical pins C1 (only one of which is shown in the figures) around which the two parallel and adjacent elements forming the first lever L1 are integrally articulated.

For the sake of simplicity, reference is made hereinafter to a single pin C1 as if the lever L1 consisted of a single element, a condition which may in fact constitute an alternative embodiment of the invention.

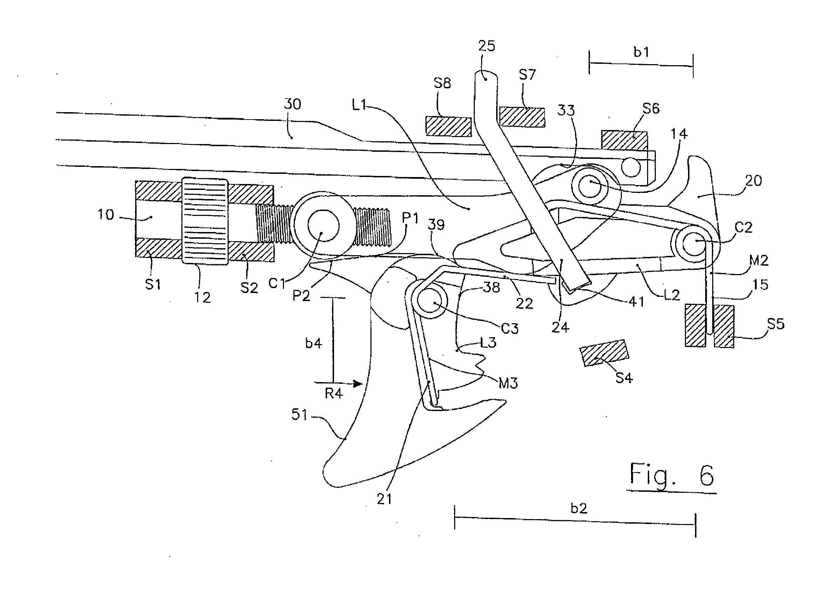

The axis of the threaded stem 10 lies substantially along the vertical plane of symmetry of the gun. Between the two bushes S1 and S2, the threaded stem 10 is provided with ring-shaped ribbing 12, the knurled lateral surface of which extends from the bushes S1 and S2 and enables the scuba diver to turn the threaded stem 10, thereby screwing or unscrewing its end in the threaded hole in the hub 11 and consequently displacing the axial position of the transverse pin C1 in the two directions indicated by the double line F1. In figures 1 to 5, for instance, the pin C1 occupies its rearmost position, whereas in figure 6 the pin C1 is at the end of its forward stroke.

The lever L1 is hinged around the pin C1 at its front end (on the left in the figure), whereas it is fitted at its rear end with a freely-revolving wheel 14. The upper side of the rear end of the lever L1 terminates with a surface 13 designed to be pushed up against a shoulder S6, which is integrally attached to the gun frame. When in contact with one another, the surface 13 and the shoulder S6 define the end of the stroke of the lever L1 in its leftward-turning angular displacement, corresponding to the resting position of the lever L1, when the gun is not loaded.

The rear end of the second lever L2 is connected to the swivel pin C2, which is positioned to the rear of the wheel 14 and on a slightly lower level than the pin C1. The anticlockwise rotation of the second lever L2 is restricted by a shoulder S4. The pin C2 is wrapped with the turns of a spring M2, which terminate with two arms 15 and 16. The lower arm 15 is retained by a pair of fixed striker plates S5, while the upper arm 16 rests up against the wheel 14 of the lever L1, consequently pushing the surface 13 towards the shoulder S6. An upward-facing bracket 20 extends from the rear end of the second lever L2, the purpose of which will be explained with reference to the subsequent figures.

The front of the trigger L3, revolving around the pin C3, has a front concave surface 51, on which the scuba diver's finger comes to bear, a cylindrical and convex surface 39, whose axis coincides with that of the pin C3, and an upper-rear concave circular surface 38 with a radius of curvature equal to the distance between the axis of the pin C2 and the front end 18 of the lever L2. At a suitable angle of leftward rotation of the trigger L3, the concave circular surface 39 overlaps the trajectory T2 traced by the end 18 of the lever L2 as it moves rightwards. In said position of the trigger L3, the edge 40 common to the surfaces 38 and 39, which traces the trajectory T3, coincides with the point T, where the trajectories T2 and T3 intersect each other.

The clockwise rotation of the trigger L3 is restricted by a ledge 19 thereof resting up against the hub 11. There is also a spring M3 wrapped around the pin C3, with a lower arm 21 that pushes the trigger L3 to turn clockwise towards its end of stroke, wherein the ledge 19 rests up against the hub 11. The upper arm 22 of the spring M3 rests elastically against the lower edge of the lever L1, co-operating with the spring M2 in pushing the lever L1 into its endmost anticlockwise position, at which the surface 13 lies in contact with the shoulder S6.

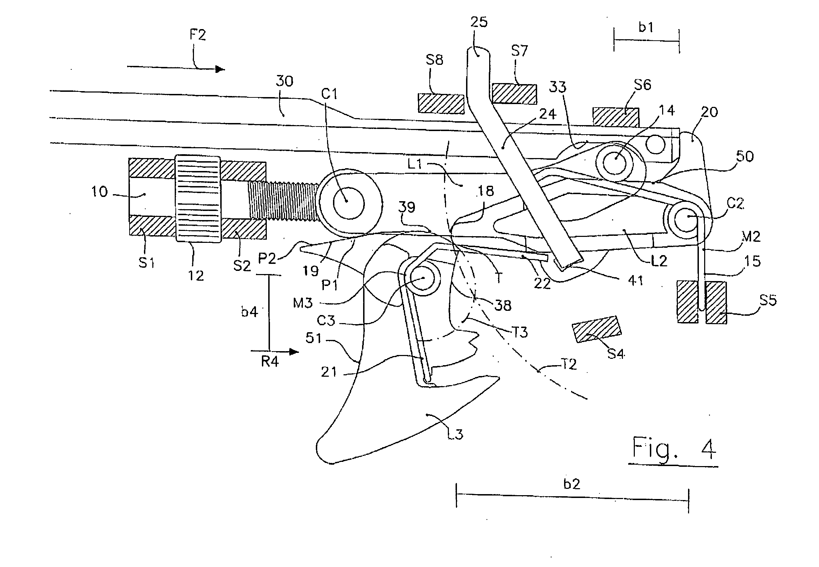

The lower end 23 of a stem 24 is housed, with an angular slack, in a seat 41 in the lever L2, the upper end 25 of said stem being retained between striker plates S7 and S8. When the device according to the invention is in the resting position, shown in figure 1, said stem 24 is withdrawn, i.e. it does not extend beyond the striker plates S7 and S8, whereas it does project therefrom when spear is loaded on the gun, as shown in figure 4. Said upper end 25 serves as a transmission element for a string line (not shown) that links the rear end of the spear shaft 30 to the frame of the gun by means of a hole 32 in the shaft to which one end of the line is attached.

On the underside of the rear end 31 of the shaft 30 an elongated recess 33 with tapered sides 34 is formed, the purpose of which will be explained later on.

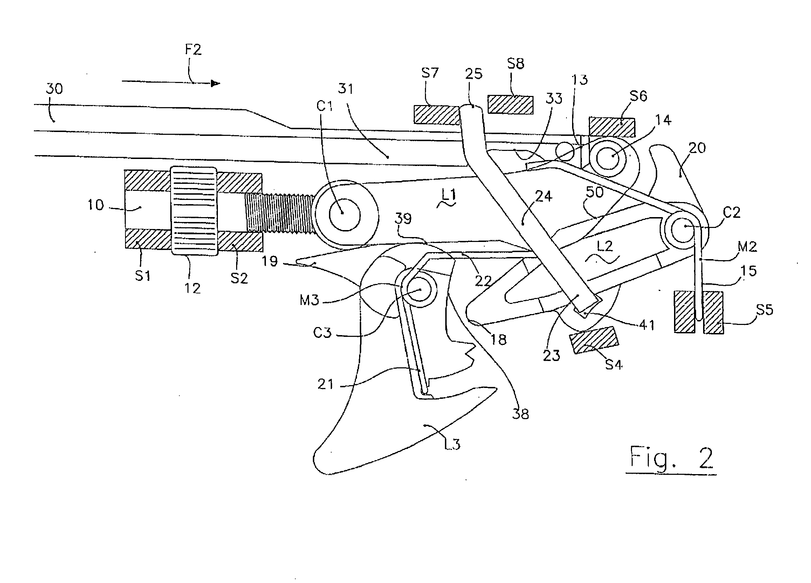

To load the gun, the shaft 30 is pushed along the gun in the direction of the arrow F2 so that its rear end 31 rests up against the wheel 14 of the lever L1, as shown in figure 2. In the condition shown in said figure, the levers L1 and L2, the trigger L3, the stem 24 and the springs M2 and M3 are still in the positions shown in figure 1.

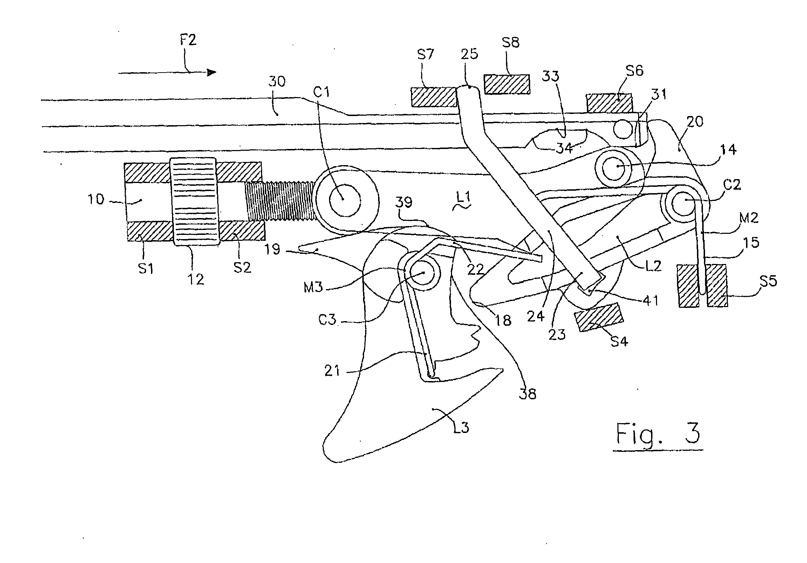

As shown in figure 3, as the shaft 30 proceeds in its displacement along the loading trajectory in the direction of the arrow F2, it rides over the wheel 14, which is thus pushed downwards, overcoming the elastic force of the springs M2 and M3 and making the lever L1 rotate towards the right. In this position of the shaft 30, its rear end 31 rests against, but does not displace end of the bracket 20 on the lever L2. The lever L2, the trigger L3, and the stem 24 are still in the positions shown in figures 1 and 2, while the angle coming between the two arms of the springs M2 and M3 is reduced due to the effect of the lever L1 being lowered to the end of its rightward turning stroke.

As it continues in its displacement in the direction of the arrow F2, the shaft 30 forces against the bracket 20, inducing the rightward rotation of the lever L2 until it reaches the end of its stroke, shown in figure 4. It should be noted that, in its endmost position, the shaft 30 does not necessarily remain in contact, at its rear end, with the bracket 20, as shown clearly with reference to the subsequent figure 6 too.

In the final position of the shaft 30, shown in figure 4, the wheel 14 rises inside the recess 33 due to the effect of the spring M2, reaching an intermediate position with respect to the terminal position of figure 1, so the lever L1 rotates partially leftwards, albeit without reaching the initial position shown in figure 1.

As the lever L2 turns to the right, driven by the rear end of the shaft 30, its front end 18 slides along the upper rear surface 38 of the trigger L3 making the trigger turn anticlockwise and overcoming the force of the spring M3, until the front end 18 of the lever L2 passes beyond the point 40, thus enabling the trigger L3 to return to the position shown in figures 1, 2, 3 and 4, due to the effect of the spring M3. At the end of this rightward rotation towards the initial position of the trigger L3 (figure 1), the front end 18 of the lever L2 rests up against the surface 39 and occupies a position substantially parallel to the longitudinal axis of the gun, with its upper surface 50 coming up against the wheel 14.

The leftward axial tensile force coming to bear on the shaft 30 in its loaded position (figure 4) is transmitted via the surface 34 interfacing with the recess 33 to the wheel 14 and via its upper surface 50 to the lever L2. Said force generates an arm moment b1, balanced by the arm moment b2 generated by the force with which the end 18 of the lever L2 rests against the surface 39 of the trigger L3. The force needed to turn the trigger leftwards must consequently generate a torque capable of exceeding the one due to the force of friction at the point of contact between the end 18 of the lever L2 and the surface 39 of the trigger L3.

It should be noted that the rightward rotation of the lever L2 results in an upward displacement of the stem 24, the upper end 25 of which extends above the striker plates S7 and S8, thus enabling the string line connecting the shaft of the spear to the gun to be hooked to said end 25.

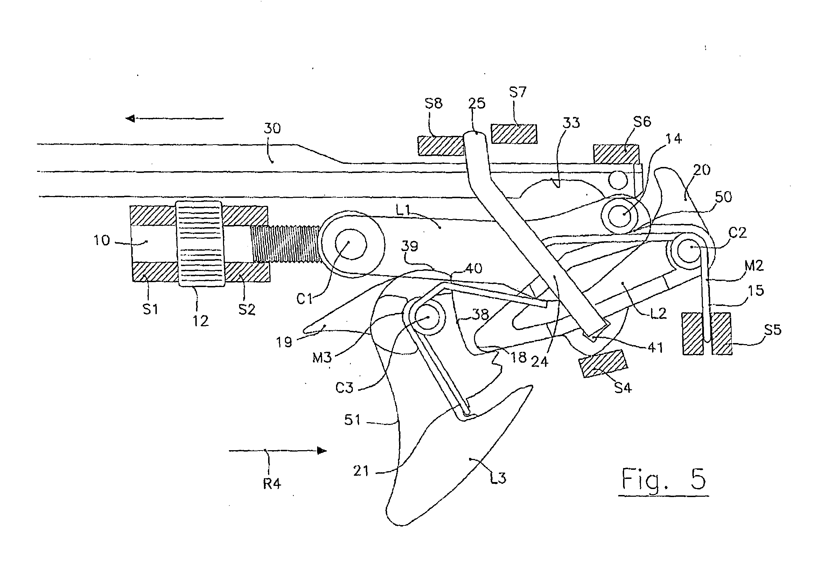

Figure 5 shows the end of the stroke of the trigger L3 under the effect of the force R4 exerted by the scuba diver's finger on its surface 51, as a result of which the shaft 30 is released by the lever L1 and begins its leftward stroke due to the effect of the tensile stress exerted by the elastic cables, which are now no longer retained, restoring the lever L1 and the wheel 14 to the positions already shown in figure 3. As the shaft 30 continues in its leftward displacement, the movable elements of the device return to the positions shown in figure 1. As mentioned previously, the force R4 overcomes the force of friction existing at the point of contact between the end 18 of the lever L2 and the surface 39 of the trigger L3, enabling the anticlockwise rotation of the trigger L3 and releasing the lever L2 that also turns anticlockwise, due to the effect of the spring M2, until it abuts against the shoulder S4.

To adjust the device, i.e. to adjust the effort needed to pull the trigger L3, reference is made to the positions shown in figures 4 and 6. In the position shown in figure 4, the upper rear portion of the ledge 19 rests against the hub 11 at the point P1. In the position shown in figure 4, as in figures 2 and 5, the hub 11 is in its rearmost position.

Supposing now that the threaded stem 10 is screwed down into the threaded hole in the hub 11, by means of an action taken on the knurled ring 12, until the hub 11 reaches its forwardmost position, as shown in figure 6, the point of contact between the hub 11 and the ledge 19 changes to P2.

It is easy to demonstrate that, moving the position of the pin C1 leftwards increases the torque needed to pull the trigger L3 by overcoming the torque of the friction generated by the force with which the end 18 of the lever L2 presses against the surface 39 of the trigger L3.

Moreover, since the upper rear part of the ledge 19 is convex, the leftward displacement of the point of contact entails a clockwise angular displacement of the lever L3 so the angular displacement required for the trigger to release the shaft 30 also increases.

Let R be the force exerted by the shaft 30 on the wheel 14 and R1 the component applied to the lever L2, the resulting moment will be M1 = R1 * b1, where b1 is the lever arm consisting of the distance of the line of action of the force R1 from the axis of rotation of the pin C2.

The moment M1 is balanced by the moment M2 = R2 * b2, where R2 is the force applied by the end 18 of the lever L2 on the surface 39, and b2 is the corresponding lever arm with respect to the axis of the pin C2.

To make the trigger L3 turn, it is consequently necessary to overcome the torque M3 = R3*b3 =f*R2*b3, where f indicates the coefficient of friction between the elements 18 and 39, and b3 is the radius of curvature of the circular surface 39 concentric to the axis of the pin C3. In other words, the torque that the scuba diver needs to exert on the trigger to make it turn is M4 = R4*b4, where R4 indicates the force applied by the scuba diver's finger on the front surface 51 of the trigger L3 and b4 indicates the arm of said force with respect to the axis of the pin C3.

Thus, R4 = R1*f*b1*b3/(b2*b4), where the only variable is the arm b1, which increases when the hub 11 is shifted leftwards, as seen in the figure, i.e. towards the front end of the gun, when the threaded stem 10 is screwed into the threaded hole in the hub 11.

It is consequently possible to vary the force required to pull the trigger, between a minimum (figure 4) and a maximum (figure 6).

It should also be noted that, when the force needed to pull the trigger is increased, the angular displacement required for the trigger to succeed in releasing the shaft 30 also increases because the extent of the sliding action of the end 18 over the surface 39 before it reaches the edge 40 of the trigger L3 is also greater.

The effect of the above-mentioned adjustment is obviously maximized when the spear shafts associated with a given gun are used, but it also allows for different shafts to be used, even if their cavity 33 differs slightly in shape or position.

Variants and/or modifications of the device for releasing the spear shaft of a fishing gun for scuba divers according to the present invention may be made without departing from the scope of this invention as defined in the following claims.

## Claims

1. A fishing gun for scuba divers comprising a device for releasing a spear shaft (30), said gun comprising a frame formed by a longitudinally elongated body providing support for said shaft and terminating with a grip portion and an underlying trigger (L3) connected pivotally to said frame, the elastically opposed operation of said trigger being designed to release a latch element (13) engaged in a shaped recess (33) formed in the rear end of said shaft (30) so as to withstand a pulling force exerted axially along said shaft (30) by elastic means connected to the frame and providing the propulsive force for firing said spear, **characterized in that** said latch element (13) is formed on a first lever (L1) pivotally connected with its front end to a threaded stem (10) fixedly attached to said frame and parallel to said longitudinal axis (X), elastic means (M2) being provided to keep said first lever (L1) in a resting position corresponding to which the gun is not loaded, wherein said latch element (13) abuts against a first shoulder (S6) integrally attached to the frame and is axially aligned with said shaft (30) when it is prepared for loading on the elongated body of the frame; said trigger (L3) comprising a abutment portion (19) elastically forced against the front end of said first lever (L1) and extending forward from a convex upper surface (39) intersecting with a concave surface (38) at an edge (40) which, with the rotation of the trigger, traces a first circular trajectory (T3); a second lever (L2) being also provided pivotally connected to said frame at a point (C2) situated behind said latch element (13) and below said front end of said first lever (L1), the front end of said second lever being displaceable along a second circular trajectory (T2) intersecting with said first circular trajectory (T3), an arm (20) of said second lever (L2) extending to intersect the trajectory of said shaft (30) as it is loaded on the gun, whereby during the axial movement for loading the spear, the spear shaft (30) abuts against said latch element (13) first, thus moving said first lever (L1) away from its resting position into a loaded position, wherein said latch element (13) engages in said shaped recess (33) and then abuts against the arm (20) of said second lever (L2), making it turn until it abuts against said first lever (L1) at said latch element (13), simultaneously bringing its front end up against the convex surface (39) of said trigger (L3), the front end of said first lever (L1) being slidingly connected to said threaded stem (10) so that said first lever (L1) is displaceable in an adjustable manner in the direction of said longitudinal axis (X) so as to vary the point at which the first lever (L1) rests against the second lever (L2) and thereby also adjust the force with which the front end of the second lever (L2) rests against the convex surface (39) of the trigger (L3).

2. The fishing gun according to claim 1, wherein said threaded stem (10) has a threaded portion screwed into a hub (11) on which at least one swivel pin (C1) is mounted, said first lever (L1) being pivotally attached to said swivel pin (C1).

3. The fishing gun according to claim 2, wherein said hub (11) is formed with a threaded through hole in which said threaded stem (10) is screwed; said threaded stem (10) being pivotable, by means of a knurled ring (12), in an axially fixed position between a pair of bushes (S1, S2).

4. The fishing gun according to any of the previous claims, wherein said abutment portion (19) on the trigger (L3) is a ledge (19) projecting forward from its upper end, designed to serve as a support for said hub (11).

5. The fishing gun according to claim 4, wherein the upper surface (39) of the ledge (19) is convex so that any variation in the axial position of the hub (11) coincides with a variation in the angular forwardmost position of the trigger (L3) and thus also the angular displacement needed for the front end of the second lever (L2) to reach the edge (40) where the convex and concave surfaces (38, 39) of the trigger (L3) intersect, thereby releasing the spear shaft (30).

6. The fishing gun according to any of the previous claims, wherein said concave surface (38) is formed along the rear side of the trigger (L3) and is an arc of a circle whose nominal radius is equal to the radius of the trajectory (T2) of the front end of the second lever (L2).

7. The fishing gun according to any of the previous claims, wherein said convex surface (39) is formed along the upper side of the trigger (L3) and forms an arc of a circle concentric with its axis of rotation.

8. The fishing gun according to any of the previous claims, wherein said elastic means (M2) acting on said first lever are coaxial with the swivel pin (C2) of said second lever (L2).

9. The fishing gun according to any of the previous claims, wherein said trigger (L3) comprises elastic means (M3) coaxial to its swivel pin (C3) and arranged between the trigger and said first lever (L1).

10. The fishing gun according to any of the previous claims, wherein said trigger (L3) and said second
lever (L2) lie on a vertical plane containing the longitudinal axis (X) of symmetry of the gun and the first lever (L1) comprises two halves extending parallel and symmetrically with respect to said axis and placed at a distance corresponding to at least the thickness of said trigger (L3) and said second lever (L2) so as to enable the free movement of said first lever (L1) with respect thereto.

11. The fishing gun according to any of the previous claims, wherein said latch element (13) is provided at the rear end of said first lever (L1) and comprises a wheel (14) on which the rear end of said shaft (30) can slidingly engage.

12. The fishing gun according to any of the previous claims, wherein a stem (24) extends from said second lever (L2), lying on said vertical plane of symmetry and slidingly connected to said frame (S7, S8), with one end (25) designed to project from said frame when said device is loaded to enable the winding of a string line for said spear.

## Patentansprüche

1. Harpunengeschütz für Gerätetaucher, enthaltend eine Vorrichtung zum Freigeben eines Speerschaftes (30), wobei das Geschütz einen Rahmen enthält, der durch einen längs gerichteten länglichen Körper gebildet ist, der eine Halterung für den Schafft bereit stellt und in einem Griffteil und einen darunter liegenden Abzug (L3) endet, der drehbar mit dem Rahmen verbunden ist, wobei die sich elastisch widersetzende Betätigung des Abzuges gestaltet ist, um ein Verriegelungselement (13) frei zu geben, das in einer geformten Ausnehmung (33) in Eingriff ist, die in dem hinteren Ende des Schaftes (30) ausgebildet ist, um einer Zugkraft zu widerstehen, die axial längs des Schaftes (30) durch elastische Einrichtungen ausgeübt wird, die mit dem Rahmen verbunden sind und die antreibende Kraft zum Abfeuern des Speeres bereit stellen, **dadurch gekennzeichnet, dass** das Verriegelungselement (13) an einem ersten Hebel (L1) ausgebildet ist, der mit seinem vorderen Ende drehbar mit einem Gewindebolzen (10) verbunden ist, der fixiert an dem Rahmen und parallel zu der längs gerichteten Achse (X) angebracht ist, wobei elastische Einrichtungen (M2) vorgesehen sind, um den ersten Hebel (L1) in einer Ruhelage zu halten, entsprechend welcher das Geschütz nicht geladen ist, wobei das Verriegelungselement (13) gegen eine erste Schulter (S6) anliegt, die integral an dem Rahmen angebracht ist und axial mit dem Schaft (30) ausgerichtet ist, wenn er zum Laden an dem länglichen Körper des Rahmens vorbereitet ist; dass der Auslöser (L3) einen Anlageteil (19) enthält, der elastisch gegen das vordere Ende des ersten Hebels (L1) gedrängt wird und sich von einer konvexen oberen Oberfläche (39) vorwärts erstreck, die sich mit einer konkaven Oberfläche (38) an einem Rand (40) schneidet, der bei der Drehung des Auslösers einer ersten zirkularen Trajektorie (T3) folgt; dass ein zweiter Hebel (L2) ebenfalls drehbar verbunden mit dem Rahmen an einem Punkt (C2) vorgesehen ist, der hinter dem Verriegelungselement (13) und unter dem vorderen Ente des ersten Hebels (L1) liegt, wobei das vordere Ende des zweiten Hebels längs einer zweiten zirkularen Trajektorie (T2) verschiebbar ist, die sich mit der ersten zirkularen Trajektorie (T3) schneidet, wobei ein Arm (20) des zweiten Hebels (L2) sich erstreckt, um die Trajektorie des Schaftes (30) zu schneiden, wie er an dem Geschütz geladen ist, wodurch während der axialen Bewegung zum Laden des Speeres der Speerschaft (30) gegen das Verriegelungselement (13) zuerst anliegt, womit der erste Hebel (L1) aus seiner Ruheposition in eine geladene Position weg bewegt wird, wobei das Verriegelungselement (13) in die geformte Ausnehmung (33) eingreift und dann gegen den Arm (20) des zweiten Hebels (L2) anliegt, was ihn zum Drehen veranlasst, bis er gegen den ersten Hebel (L1) an dem Verriegelungselement (13) anliegt, wobei gleichzeitig sein vorderes Ende nach oben gegen die konvexe Oberfläche (39) des Auslösers (L3) gebracht wird, wobei das vordere Ende des ersten Hebels (L1) verschiebbar mit dem Gewindebolzen (10) verbunden ist, so dass der erste Hebel (L1) in einer einstellbaren Weise in der Richtung der längs gerichteten Achse (X) verschiebbar ist, um den Punkt zu variieren, bei welchem der erste Hebel (L1) gegen den zweiten Hebel (L2) anliegt, und dadurch auch die Kraft einzustellen, mit welcher das vordere Ende des zweiten Hebels (L2) den die konvexe Oberfläche (39) des Auslösers (L3) anliegt.

2. Harpunengeschütz nach Anspruch 1, wobei der Gewindebolzen (10) einen Gewindeteil hat, der in eine Nabe (11) eingeschraubt ist, an welcher wenigstens ein Drehstift (C1) montiert ist, wobei der erste Hebel (L1) drehbar an dem Drehstift (C1) angebracht ist.

3. Harpunengeschütz nach Anspruch 2, wobei die Nabe (11) mit einem Gewindedurchgangsloch ausgebildet ist, in welches der Gewindebolzen (10) eingeschraubt ist; wobei der Gewindebolzen (10) mittels eines gerändelten Rings (12) in einer axial fixierten Position zwischen einem Paar von Hülsen (S1, S2) drehbar ist.

4. Harpunengeschütz nach einem der vorhergehenden Ansprüche, wobei der Anlageteil (19) an dem Auslöser (L3) ein von seinem oberen Ende vorwärts vorstehender Vorsprung (19) ist, der gestaltet ist, um als eine Halterung für die Nabe (11) zu dienen.

5. Harpunengeschütz nach Anspruch 4, wobei die obere Oberfläche (39) des Vorsprungs (19) konvex ist, so dass jegliche Variation in der axialen Position der Nabe (11) mit einer Variation in der winkelmäßig vordersten Position des Auslösers (L3) und somit auch der winkelmäßigen Verschiebung zusammenfällt, die für das vordere Ende des zweiten Hebels (L2) erforderlich ist, um den Rand (40) zu erreichen, wo sich die konvexen und konkaven Oberflächen (38, 39) des Auslösers (L3) schneiden, wodurch der Speerschaft (30) freigegeben wird.

6. Harpunengeschütz nach einem der vorhergehenden Ansprüche, wobei die konkave Oberfläche (38) längs der hinteren Seite des Auslösers (L3) gebildet ist und ein Bogen eines Kreises ist, dessen nominaler Radius gleich dem Radius der Trajektorie (T2) des vorderen Endes des zweiten Hebels (L2) ist.

7. Harpunengeschütz nach einem der vorhergehenden Ansprüche, wobei die konvexe Oberfläche (39) längs der oberen Seite des Auslösers (L3) ausgebildet ist und einen Bogen eines Kreises bildet, der konzentrisch mit seiner Drehachse ist.

8. Harpunengeschütz nach einem der vorhergehenden Ansprüche, wobei die elastischen Einrichtungen (M2), die auf den ersten Hebel wirken, koaxial mit dem Drehstift (C2) des zweiten Hebels (L2) sind.

9. Harpunengeschütz nach einem der vorhergehenden Ansprüche, wobei der Auslöser (L3) elastische Einrichtungen (M3) enthält, die koaxial zu seinem Drehstift (C3) sind und zwischen dem Auslöser und dem ersten Hebel (L1) angeordnet sind.

10. Harpunengeschütz nach einem der vorhergehenden Ansprüche, wobei der Auslöser (L3) und der zweite Hebel (L2) auf einer vertikalen Ebene liegen, die die längs gerichtete Symmetrieachse (X) des Geschützes enthält, und der erste Hebel (L1) zwei Hälften enthält, die sich parallel und symmetrisch bezüglich der Achse erstrecken und in einem Abstand entsprechend wenigstens der Dicke des Auslösers (L3) und des zweiten Hebels (L2) angeordnet sind, um die freie Bewegung des ersten Hebels (L1) bezüglich dazu zu ermöglichen.

11. Harpunengeschütz nach einem der vorhergehenden Ansprüchen, wobei das Verriegelungselement (13) an dem hinteren Ende des ersten Hebels (L1) vorgesehen ist und ein Rad (14) enthält, an welchem das hintere Ende des Schaftes (30) verschiebbar eingreifen kann.

12. Harpunengeschütz nach einem der vorhergehenden Ansprüche, wobei sich ein Bolzen (24) von dem zweiten Hebel (L2) auf der vertikalen Symmetrieebene liegend und verschiebbar mit dem Rahmen (S7, S8) verbunden erstreckt, wobei ein Ende (25) gestaltet ist, um von dem Rahmen vorzustehen, wenn die Vorrichtung geladen ist, um das Aufwickeln einer Spannschnur für den Speer zu ermöglichen.

## Revendications

1. Un fusil de chasse sous marine pour plongeurs autonomes comportant un dispositif pour libérer une tige de harpon (30), ledit fusil comprenant un châssis formé d'un corps allongé longitudinalement fournissant un support pour ladite tige et se terminant par une partie poignée et une détente (L3) située en dessous et montée pivotante sur ledit châssis, l'actionnement élastiquement opposé de ladite détente étant prévu pour libérer un élément de verrou (13) engagé dans une encoche préformée (33) réalisée dans l'extrémité arrière de ladite tige (30) de façon à résister à une force de traction exercée axialement le long de ladite tige (30) par des moyens élastiques reliés au châssis et fournissant la force de propulsion pour lancer ledit harpon, **caractérisé en ce que** ledit élément de verrou (13) est formé sur un premier levier (L1) monté pivotant par son extrémité avant sur une tige filetée (10) fixée solidairement sur ledit châssis et parallèle au dit axe longitudinal (X), des moyens élastiques (M2) étant prévus pour maintenir ledit premier levier (L1) dans une position de repos correspondant à celle dans laquelle le fusil n'est pas chargé, où ledit l'élément de verrou (13) vient buter contre un premier épaulement (S6) fixé solidairement au châssis et est axialement aligné avec ladite tige (30) quand elle est préparée pour le chargement sur le corps allongé du châssis ; ladite détente (L3) comportant une partie butée (19) appliquée élastiquement contre l'extrémité avant du dit premier levier (L1) et se prolongeant vers l'avant à partir d'une surface supérieure convexe (39) coupant une surface concave (38) sur un bord (40) qui, avec la rotation de la détente, trace une première trajectoire circulaire (T3) ; un second levier (L2) étant également prévu monté pivotant sur ledit châssis en un point (C2) situé derrière ledit élément de verrou (13) et en dessous de ladite extrémité avant du dit premier levier (L1), l'extrémité avant du dit second levier étant déplaçable le long d'une seconde trajectoire circulaire (T2) coupant ladite première trajectoire circulaire (T3), un bras (20) du dit second levier (L2) s'étendant pour couper la trajectoire de ladite tige (30) lorsqu'elle est chargée sur le fusil, de sorte que, lors du mouvement axial pour charger la harpon, la tige de harpon (30) vient d'abord buter contre ledit élément de verrou (13), éloignant ainsi ledit premier levier (L1) de sa position de repos pour l'amener dans une position chargée, où ledit élément de verrou (13) s'engage dans ladite encoche préformée (33) et vient ensuite buter contre le bras (20) du dit second levier (L2), pour le faire tourner par rapport au dit élément de verrou (13) jusqu'à ce qu'il vienne buter contre ledit premier levier (L1), en levant simultanément son extrémité avant contre la surface convexe (39) de ladite détente (L3), l'extrémité avant du dit premier levier (L1) étant monté coulissante sur ladite tige filetée (10) de façon que ledit premier levier (L1) peut être déplacé d'une façon réglable dans la direction du dit axe longitudinal (X) afin de faire varier le point sur lequel le premier levier (L1) repose contre le second levier (L2) et ainsi ajuster la force avec la laquelle l'extrémité avant du second levier (L2) repose contre la surface convexe (39) de la détente (L3).

2. Le fusil de chasse sous marine selon la revendication 1, où ladite la tige filetée (10) comporte une partie filetée vissée dans un pivot (11) sur lequel est montée au moins une goupille tourillon (C1), ledit premier levier (L1) étant monté pivotant sur ladite goupille tourillon (C1).

3. Le fusil de chasse sous marine selon la revendication 2, où ledit pivot (11) comporte un orifice traversant fileté dans lequel est vissée ladite tige filetée (10), ladite tige filetée (10) pouvant être pivotée, au moyen d'un anneau moleté (12), dans une position fixée axialement entre une paire de bagues (S1, S2).

4. Le fusil de chasse sous marine selon l'une quelconque des revendications précédentes, où ladite partie butée (19) sur la détente (L3) est un rebord (19) se projetant en avant de son extrémité supérieure, agencé pour servir de support au dit pivot (11).

5. Le fusil de chasse sous marine selon la revendication 4, où la surface supérieure (39) du rebord (19) est convexe de sorte que n'importe quelle variation de la position axiale du pivot (11) coïncide avec une variation de la position angulaire la plus en avant de la détente (L3) et ainsi aussi avec le déplacement angulaire nécessaire à l'extrémité avant du second levier (L2) pour atteindre le bord (40) où les surfaces convexe et concave (38, 39) de la détente (L3) se coupent, libérant de ce fait la tige de harpon (30).

6. Le fusil de chasse sous marine selon l'une quelconque des revendications précédentes, où ladite surface concave (38) est formée le long du côté arrière de la détente (L3) et est un arc d'un cercle dont le rayon nominal est égal au rayon de la trajectoire (T2) de l'extrémité avant du second levier (L2).

7. Le fusil de chasse sous marine selon l'une quelconque des revendications précédentes, où ladite surface convexe (39) est formée le long du côté supérieur de la détente (L3) et forme un arc d'un cercle qui est centré sur son axe de rotation.

8. Le fusil de chasse sous marine selon l'une quelconque des revendications précédentes, où lesdits moyens élastiques (M2) agissant sur ledit premier levier et la goupille tourillon (C2) du dit second levier (L2) sont coaxiaux.

9. Le fusil de chasse sous marine selon l'une quelconque des revendications précédentes, où ladite détente (L3) comprend des moyens élastiques (M3) coaxiaux avec sa goupille tourillon (C3) et agencés entre la détente et ledit premier levier (L1).

10. Le fusil de chasse sous marine selon l'une quelconque des revendications précédentes, où ladite détente (L3) et ledit second levier (L2) s'étendent dans un plan vertical contenant l'axe longitudinal (X) de symétrie du fusil et le premier levier (L1) comporte deux moitiés s'étendant parallèlement et symétriquement par rapport au dit axe et situées à une distance correspondant à au moins l'épaisseur de ladite détente (L3) et du dit second levier (L2) afin de permettre le libre mouvement du dit premier levier (L1) par rapport à eux.

11. Le fusil de chasse sous marine selon l'une quelconque des revendications précédentes, où ledit l'élément de verrou (13) est agencé à l'extrémité arrière du dit premier levier (L1) et comporte une roue (14) sur laquelle l'extrémité arrière de ladite tige (30) peut s'engager de façon coulissante.

12. Le fusil de chasse sous marine selon l'une quelconque des revendications précédentes, où une tige (24) s'étend à partir du dit second levier (L2), dans ledit plan vertical de symétrie et est montée coulissante sur ledit châssis (S7, S8), avec une extrémité (25) agencée pour faire saillie à partir du dit châssis quand ledit dispositif est chargé pour permettre l'enroulement d'une corde pour ledit harpon.
